# EUROPEAN PATENT SPECIFICATION

(11) **EP 3 525 632 B1**
(45) Date of publication and mention of the grant of the patent: **20.05.2020**
(21) Application number: 17791626.9
(22) Date of filing: 17.10.2017
(51) Int. Cl.: A47J 19/02, A47J 19/06

(54) **JUICE EXTRACTOR**
SAFTPRESSE
EXTRACTEUR DE JUS

(30) Priority: 17.10.2016 EP 16194102
(43) Date of publication of application: 21.08.2019
(73) Proprietor: Koninklijke Philips N.V., 5656 AG Eindhoven (NL)
(72) Inventor: TE VELDE, Mart, Kornelis-Jan, 5656 AE Eindhoven (NL); TOONEN, Stefan, Johannes, Hendrikus, 5656 AE Eindhoven (NL)
(74) Representative: Philips Intellectual Property & Standards
(86) International application number: PCT/EP2017/076389
(87) International publication number: WO 2018/073195

(56) References cited:
- EP-A1- 2 522 259
- WO-A1-2016/058829
- DE-C- 643 617
- DE-C- 725 563

## Description

### FIELD OF THE INVENTION

The present invention relates to a juice extractor, more particularly an electric juice extractor.

### BACKGROUND OF THE INVENTION

Juice extractors are known, for instance from WO2016058829A1 and WO2015150233A1. Typically, such juice extractors comprise a food processing chamber and a spindle for extracting juice from food products that during use are inserted in said food processing chamber. The remaining solid constituents, hereinafter also referred to as pulp, are expelled into a receptacle. This receptacle usually forms part of the overall juice extractor design and therefore may be restraint in size, shape and/or capacity. As a result, the receptacle may have to be emptied regularly during use, which can be considered inconvenient.

### SUMMARY OF THE INVENTION

The present invention seeks to provide a juice extractor that can handle relatively large amounts of pulp, without compromising the overall size of the juice extractor.

The invention is defined by the claims.

According to an aspect of the invention, there is provided a juice extractor comprising a main body comprising a food inlet, for receiving food to be juiced, a juice outlet for expelling juice extracted from said food, and a pulp discharge opening for expelling pulp from the juice extractor. The main body may further delimit a food processing chamber with a food compression section arranged between the food inlet and a pulp outlet, and a spindle, rotatably mounted in the food processing chamber, for transporting food from the food inlet through the food compression section and for transporting pulp through the pulp outlet. The main body further comprises a pulp pushing section, arranged between the pulp outlet and the pulp discharge opening. The pulp pushing section has a pulp inlet which communicates with the pulp outlet. The pulp inlet and the discharge opening are arranged such that food enters and is discharged from the pulp pushing section in respective axial and radial directions. The pulp pushing section comprises pushing means arranged to actively push the pulp out of the discharge opening in the radial direction. The pushing section has a core rotatable in a bore. The pushing means comprises a blade having a first portion and a second portion. One of the core and bore is provided with the blade and the other of the core and bore is provided with at least one rib. The at least one rib and the second portion of the blade are arranged to promote transport of the pulp in the axial direction. The first portion of the blade is arranged to promote transport in the radial direction, towards and through the discharge opening.

"Actively" push means that the pulp pushing section is arranged to exert a force on the pulp in addition to any gravitational force component that in use may act thereon.

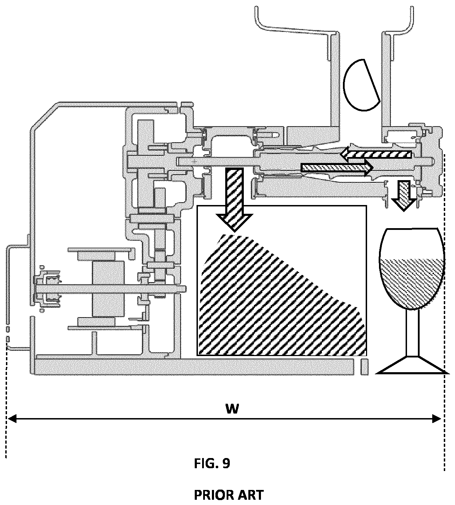

The pulp pushing section offers several advantages. It allows more efficient, more complete filling of a pulp receptacle that in use may be arranged adjacent the pulp discharge opening. Applicant has realized that one of the reasons why prior art receptacles may fill up prematurely is because the pulp is allowed to exit the discharge opening of the juice extractor through gravity only. The pulp falls down into the receptacle and heaps up directly underneath the pulp outlet, as illustrated in Fig. 9. As the pulp heap grows, it eventually reaches and blocks the pulp outlet. At such time the receptacle will need to be emptied although it may not yet be full. With a pulp pushing section according to the invention, the pulp does not fall down in a heap, but much rather is urged into the receptacle with a certain force. Thus, every part of the receptacle may be filled, resulting in the receptacle's capacity being more efficiently used.

As the pulp is actively urged into the receptacle, the latter will be filled, no matter its shape. Accordingly, the receptacle may have a more complex shape. Thus, more design freedom is available to fit a receptacle of a certain capacity in the juice extractor, i.e. within the contour of the main body, without compromising the juice extractor's overall design. For instance, the height of the receptacle as measured directly below the pulp discharge opening may no longer be a limiting factor, so does not need to be maximized. Thus, the receptacle may for instance be locally formed with an elevated bottom portion. The space underneath said elevated bottom portion may then advantageously be occupied by other components of the juice extractor, e.g. drive means that drive the spindle. Thus, the space available within the outer contour of the juice extractor may be optimally used, which ultimately may result in a decrease of the juice extractor's overall dimensions.

The pulp pushing section may further help to prevent pulp from getting stuck in the main body, more particularly in the pulp discharge opening. This may in particular be advantageous in embodiments where the pulp discharge opening extends in a non-vertical direction and consequently the gravitational force components on the pulp are too small to cause it to exit the discharge opening.

The pulp pushing section is not intended to extract further juice from the pulp. Pulp entering the pulp pushing section is already free or sufficiently free from juice. Accordingly, the pulp pushing section can be devoid from juice extracting means and juice outlets.

In at least some embodiments, the pulp pushing section and/or the pushing means may be arranged to condense the pulp, i.e. increase its density, thus decreasing its volume. This may result in even more efficient use of the receptacle's capacity. Condensing the pulp may also result in the pulp exiting the juice extractor in the form of a string, continuous or semi-continuous. This may contribute to a cleaner, or at least less messy look than the prior art pulp heap. The string may have a cross section that corresponds to that of the pulp discharge opening.

The pulp pushing means comprises a blade for guiding or pushing the pulp towards the discharge opening. The blade may be moved along the discharge opening, e.g. in a translational movement or a rotational movement. The latter has the advantage that it can be readily done by the same drive means that drive the spindle, without complicated transmission means.

In at least some embodiments the blade may have a curved shape. Thanks to such curved shape the blade can support movement of the pulp in different directions. For instance, where the pulp pushing section is of essentially cylindrical shape with an axially oriented pulp inlet and a radially oriented pulp discharge opening, the blade may be curved so as to have a section near the pulp inlet that supports movement of the pulp in axial direction, and a section near the discharge opening that supports movement of the pulp in radial direction. The section near the discharge opening may extend in a substantially axial direction or include a small angle therewith. The section near the pulp inlet may curve away from the axial direction and extend in a more tangential direction

In at least some embodiments the blade may have a spiral shape, wherein the spiral preferably extends over at least 360 degrees.

In at least some embodiments, the blade may be arranged on a core that rotates within a bore. The inner surface of the bore may be provided with at least one rib. The at least one rib may be straight or curved. Thanks to the at least one rib, the reaction forces on the pulp will be enhanced and movement of the pulp is better supported, especially in axial and radial direction

In at least some embodiments, the pushing means is arranged to push the pulp through the discharge opening in a direction that corresponds to a main filling direction of the receptacle.

In this context, main filling direction means the direction in which pulp would normally be introduced in the receptacle. Often, this main filling direction will correspond to the normal of the fill opening of the receptacle. The orientation of the fill opening may vary, and may for instance depend on the location and/or orientation of the pulp discharge opening. For instance, the pulp discharge opening may be located in a bottom part of the juice extractor, so as to face downwards. In such case, the receptacle may be disposed below this pulp discharge opening, with a fill opening facing upward, i.e. with a normal of the fill opening extending substantially vertically. In such case, the pulp pushing section may be arranged to exert a vertically downward force on the pulp. This vertically downward force adds up to the gravitational force working on the pulp, and may be considerably larger than this gravitational force. In an alternative embodiment, the pulp discharge opening may for instance face sideward. In such case, the receptacle may be designed with a fill opening facing sideward as well, parallel to the pulp discharge opening, with a normal of said fill opening extending substantially horizontally. In such case the pulp pushing section may be arranged to exert a horizontal force on the pulp, in the same direction as the normal to the fill opening.

In at least some embodiments, the pulp pushing section is arranged directly downstream of the pulp outlet, wherein "downstream" is to be interpreted in relation to the main transport direction of the pulp. In such case, a pulp inlet of the pulp pushing section may coincide with the pulp outlet of the food compression section.

### BRIEF DESCRIPTION OF THE DRAWINGS

Embodiments of the invention are described in more detail and by way of nonlimiting examples with reference to the accompanying drawings, wherein:
Fig. 1 schematically depicts an embodiment of a juice extractor with a pulp pushing section;
Fig. 2 schematically depicts a food processing chamber of a juice extractor, for example the juice extractor of Fig. 1;
Fig. 3 schematically depicts the pulp pushing section of Fig. 1 in further detail;
Fig. 4 depicts the pulp pushing section of Fig. 3 in cross sectional view;
Fig. 5 depicts the pulp pushing section of Fig. 3, in exploded view;
Fig. 6 depicts a component of the pulp pushing section of Fig. 3;
Fig. 7 depicts an alternative embodiment of a pulp pushing section in exploded view;
Fig. 8 depicts a component of the pulp pushing section of Fig. 7; and
Fig. 9 depicts a prior art juice extractor.

### DETAILED DESCRIPTION OF THE EMBODIMENTS

It should be understood that the Figs. are merely schematic and are not drawn to scale. It should also be understood that the same reference numerals are used throughout the Figs. to indicate the same or similar parts.

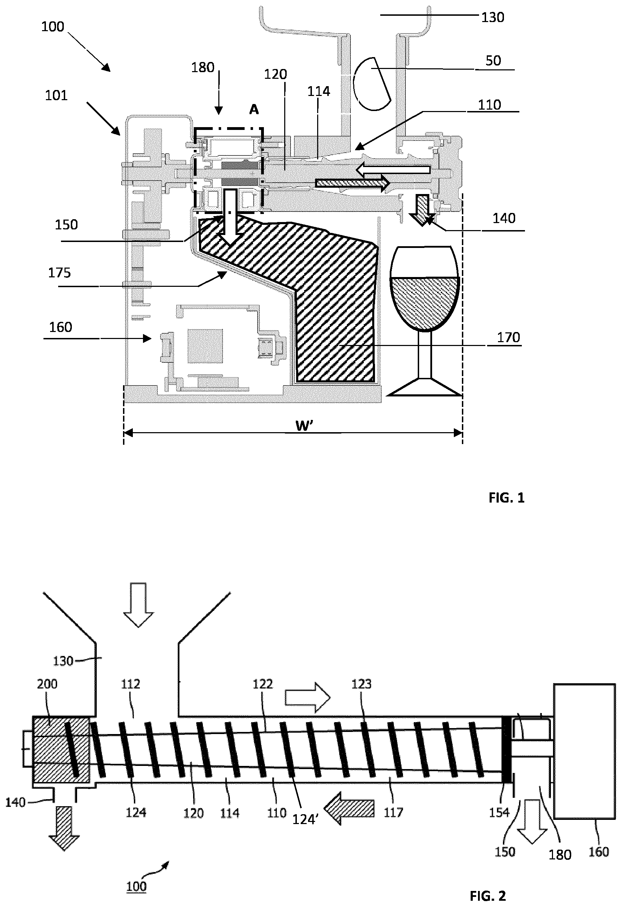

Fig. 1 schematically depicts a juice extractor 100 according to an embodiment of the invention. The juice extractor 100 may for instance be a horizontal juice extractor, as illustrated. The juice extractor 100 includes a main body 101 with a food inlet 130, a juice outlet 140 and a pulp discharge opening 150. The main body 101 delimits a food processing chamber 110 that includes aforementioned food inlet 130 and juice outlet 140, and further includes a pulp outlet 154 and a spindle 120, rotatably mounted in said food processing chamber 110. The main body 101 further delimits a pulp pushing section 180 that in the illustrated embodiment adjoins the food processing chamber 110, and includes the pulp discharge opening 150. The juice extractor 100 may further comprise drive means 160 for rotating the spindle 120, and a receptacle 170 for collecting pulp exiting the discharge opening 150.

The receptacle 170 may form part of the juice extractor, that is, it may releasably fit therein. Alternatively, it may be a separate, autonomous component, with no interconnection to the juice extractor other than that its fill opening can be positioned adjacent the discharge opening 150, to receive pulp expelled therefrom.

The drive means 160 may for instance include an electromotor. They may further include suitable transmission means and reduction means, e.g. a gearbox (not shown). The drive means may for instance be arranged to rotate the spindle 120 at a rate of at least 250 rpm, e.g. at a rate of least 300 rpm, or at a rate of at least 500 rpm in some embodiments. In some specific embodiments, the drive means 160 may be arranged to rotate the spindle 120 at a rate of up to 2000 rpm or beyond. Alternatively, the drive means 160 may be arranged so as to allow the juice extractor 100 to have a food throughput rate of e.g. 5-10 g/s. The drive means 160 may be located at the same downstream end as the pulp outlet 154, as illustrate in Fig.1 and 2. Alternatively, the drive means may be located at the upstream end of the spindle 120, near the food inlet 130.

Referring to Fig. 2, the food processing chamber 110 may comprise a food entry section 112 adapted to receive food portions 50, inserted therein via the food inlet 130. The food inlet 130 may have any suitable shape, e.g. a funnel shape, as illustrated. The food processing chamber 110 may further comprise a food compression section 114 in which the food portions 50 are compressed to extract juice therefrom.

The spindle 120 is arranged to transport food from the food inlet 130 towards the food compression section 114 as indicated by the clear block arrows in Fig. 1 and 2. The spindle 120 may comprise a core 122 carrying a helical member 123. The helical member 123 may have a helical cutting portion 124, for cutting the food portions 50 into chunks. The helical cutting portion 124 may extend over the full length of the spindle body 122, i.e. may extend from the food entry section 112 into the food compression section 114. Alternatively, the helical member 123 may further comprise a helical food transport portion 124' adjoining the helical cutting portion 124, said helical food transport portion 124' being located in the food compression section 114 to transport food chunks from the food entry section 112 towards and through the food compression section 114. The helical food transport portion 124' may be located throughout the food compression section 114 or at least in part thereof. It may have a different shape to the helical food cutting portion 124, for instance it may be devoid of sharp edges, as this helical food transport portion 124' may not be required to further shred the food. This may facilitate handling of the spindle 120, e.g. for cleaning purposes, without risking injury to the person handling it. The exact point at which the helical member 123 transforms from a cutting member to a transport member is not particularly critical as long as this transformation point does not interfere with the cutting process provided by the spindle 120.

In some embodiments, the spindle 120 may have different diameters in the food entry section 112 and the food compression section 114. For instance, its outer diameter may be larger in the food entry section 112 than in the food compression section 114.

Juice extraction is achieved by compressing the food chunks that are transferred from the food entry section 112 into the food compression section 114. Such compression is typically realized by gradually reducing the available volume for the food chunks within the food compression section 114. This may be achieved by one or more of the following.

The available volume of the food compartments (as defined by the height H and pitch P of adjacent turns of the helical member 123) may decrease, e.g. by gradually increasing the diameter D' of the spindle's body 122, in the transport direction of the food chunks, i.e. in the direction from the food entry section towards the pulp outlet 154. The height H of the helical member 123 may decrease at the same rate and in the same direction so that the outer diameter D of the spindle 120 remains constant, i.e. D' + H = constant at any cross-section of the spindle 120. Alternatively or additionally, the pitch P of the helical member 123 (e.g. the distance between neighbouring turns) may gradually decrease in the transport direction of the food chunks.

Alternatively or additionally the spindle 120 may include one or more additional helical members. Such additional helical members reduce the available volume for the pulp on the spindle 120, thereby compressing the pulp and extracting the juice therefrom.

Alternatively or additionally, the inner dimensions of the food compression section 114 may decrease in the food transport direction, thus gradually reducing the volume available for the food chunks between the spindle 120 and said food compression section 114.

Alternatively or additionally, the food compression may be achieved by the pulp outlet 154 defining a constriction through which the pulp has to be forced by the spindle 120, thereby squeezing any remaining juice from the pulp before it exits the compression section 114. The pulp outlet 154 may for instance include a plate or the like, with one or more apertures that cause pulp transported by the spindle 120 to be forced through said apertures. This restriction increases the pressure exerted on the pulp, thus forcing juice to be removed therefrom.

The juice outlet 140 allows extracted juice to exit the juice extractor 100. The juice outlet 140 may be arranged at any suitable location along the food processing chamber 110. For instance, it may be located at a downstream end of the food processing chamber 110, near the pulp outlet 154. Alternatively, it may be located at an upstream end of the food processing chamber 110, as illustrated in Fig. 1 and 2. The latter has the advantage that the juice is expelled in a particularly accessible location, which facilitates juice collection, whereas the pulp is expelled out of immediate view of the user, thus giving the appearance of the juice extractor 100 producing juice rather than pulp.

Extracted juice may be collected in one or more juice channels that may extend from the pulp outlet 154 towards the juice outlet 140. The or each channel may for instance be formed by one or more gaps 117 provided between the spindle 120 and the inner wall of the food compression section 114. Preferably, the or each gap 117 is dimensioned such that the extracted juice can flow through the gap towards the juice outlet 140, whilst preventing food pulp from entering this gap. The juice may be transported towards the juice outlet 140 by gravity and/or by a pressure gradient created in the food compression section 114 with pressures increasing from the food entry section 112 towards the pulp outlet 154.

The juice extractor 100 may further comprises a sieve or filter 200, to filter out remaining solid materials from the extracted juice, thus assisting in reducing the pulp content in the juice expelled from the juice extractor. The filter may be located at any suitable location in the flow path of the extracted juice, for instance in the food compression section 114 or directly over the juice outlet 140.

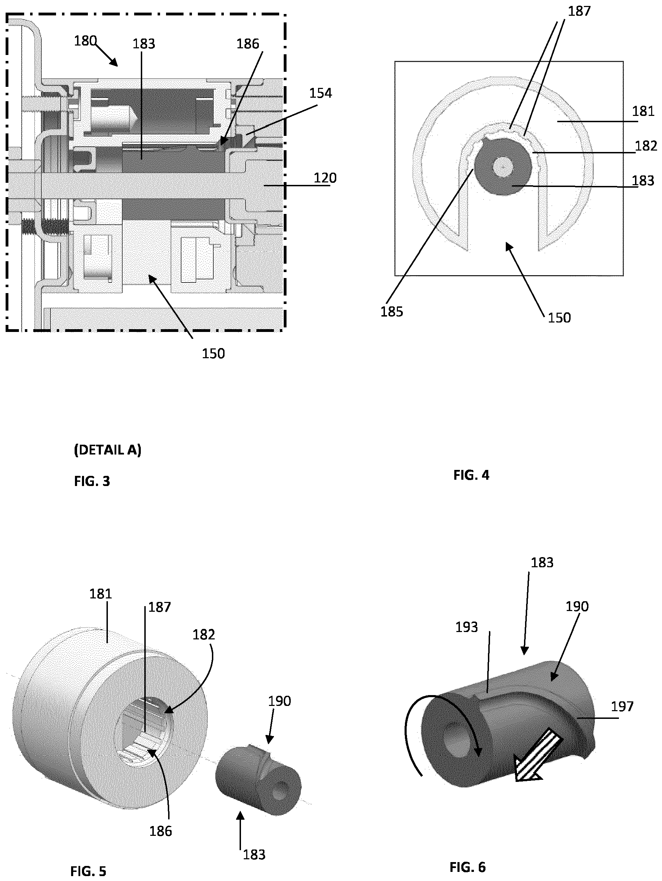

Referring to Figs. 3 to 6, showing an embodiment of a pulp pushing section 180 with pushing means according to the invention. The illustrated pulp pushing section 180 comprises a stationary housing 181 with a cylindrical bore 182, and a cylindrical core 183 that is rotatably mounted in said bore 182, delimiting a ring shaped chamber 185. The core 183 may have its axis of rotation aligned with that of the spindle 120 and may be rotated by the same drive means 160 as the spindle 120.

One of the axial ends of the ring shaped chamber 185 may form a pulp inlet 186, communicating with the pulp outlet 154 of the food compression section 114, as best seen in Fig. 3. The ring shaped chamber 185 may further include a pulp discharge opening 150, which in the illustrated embodiment extends radially downward through a cylindrical wall of the housing 181, as best seen in Fig. 3 and 4. In an alternative embodiment, the pulp discharge opening 150 may for instance extend in a radially sideward direction or be located at the other axial end of the ring shaped chamber 185, facing away from the pulp inlet 186.

In the illustrated embodiment, the outer surface of the core 183 is provided with a blade 190. The blade may extend along the length of the core 183 and in the illustrated embodiment has a curved shape. More particularly, as best seen in Fig. 5 and 6, the blade 190 may have a first portion 193 (located away from the pulp inlet 186) extending in a substantially axial direction of the core 183, or including a small angle therewith. The blade 190 may have a second portion 197, located near the pulp inlet 186, extending in a tangential direction of the core 183. The second portion 197 may for instance include an angle with the first portion 193 of around 135 degrees, or preferably less.

In at least some embodiments, the inner surface of the bore 182 may be provided with ribs 187, as illustrated in Fig. 4 and 5. These ribs 187 may extend in axial direction of the bore 182 and may be straight. They may be distributed along the bore's inner circumference at regularly spaced intervals.

In an alternative embodiment, the shape of the blade 190 and ribs 187 may be reversed, that is, the ribs 187 may have a curved shape, and the blade 190 may have a straight shape.

In an alternative embodiment, the straight ribs 187, respectively straight blade 190 may be omitted all together. In such embodiments, the ring shaped chamber 185 may include a curved blade 190 only, no straight ribs 187; or curved ribs only, no straight blade.

In yet an alternative embodiment, both the ribs 187 and the blade 190 may have a spiralled or curved shape.

In operation, one or more food portions 50 are introduced in the food processing chamber 110 via the food inlet 130. The food portions 50 are shredded into food chunks by the helical cutting portions 124 in the food entry section 112. These chunks are then transported into the food compression section 114 by the spindle 120, where juice is extracted from the food chunks by compression. This juice is expelled from the food processing chamber 110 via the juice outlet 140 while the pulp is expelled via the pulp outlet 154. This pulp subsequently enters the ring shaped chamber 185 of the pulp pushing section 180. Here, it is bundled and urged through the discharge opening 150 through combined operation of the ribs 187 and blade 190. More particularly, the ribs 187 and second portion 197 of the blade 190 promote transport of the pulp in axial direction, away from the pulp inlet 186, whereas the first portion 193 promotes transport in radial direction, towards and through the discharge opening 150.

Thanks to the pulp pushing section 180, pulp will be actively pushed into the pulp receptacle 170, rather than falling therein through gravity. This ensures a good, complete filling of the receptacle. As a result, the receptacle may have to be emptied less frequently. Moreover, the receptacle can have a complex shape, adapted to the available space in the juice extractor 100. As a result, the overall size of the juice extractor may be reduced. This is illustrated in Fig. 1, where the receptacle 170 is provided with an elevated bottom portion 175, creating space below said bottom portion 175 for other juice extractor components. In the illustrated embodiment, the space is used to shift the drive means 160 inward, thus reducing the overall width W' of the juice extractor as compared to the width W of the prior art juicer shown in Fig. 9.

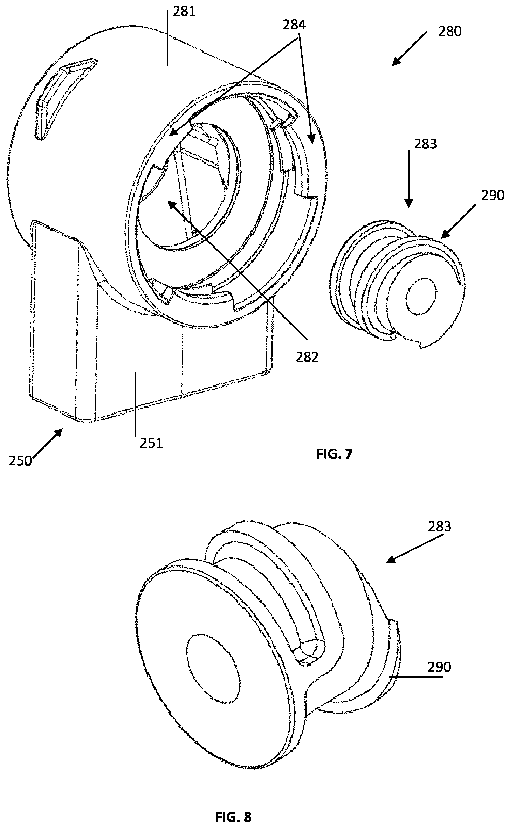

Figs. 7 and 8 show a further embodiment of a pulp pushing section 280 with pushing means according to the invention. Components and/or features corresponding to the ones in Figs. 3 to 6 have been denoted with the same reference numbers, augmented by 100.

The pulp pushing section 280 comprises a stationary housing 281 with a cylindrical bore 282, and a cylindrical core 283 that is rotatably mounted in said bore 282, delimiting a ring shaped chamber. The core 283 may have its axis of rotation aligned with that of the spindle 120 and may be rotated by the same drive means 160 as the spindle 120. The core 283 differs from the embodiment previously described in that the blade 290 spirals along its outer surface with at least one winding. The bore 282 may be provided with similar ribs as the embodiment of Figs. 3 to 6.

The pulp pushing section 280 further differs over the earlier described embodiment in that the pulp discharge opening 250 is provided with a tubular extension 251 of rectangular cross section. Of course, in alternative embodiments, the tubular extension 251 may have a different cross section. In the illustrated embodiment the extension is directed essentially downward. In an alternative embodiment, the housing 281 may be rotated, causing the tubular extension to extend in a direction other than downward, e.g. radially sideward.

The or each axial end of the housing 281 may be provided with a coupling means 284, such as a bayonet type coupling as illustrated, for easy coupling of the housing 281 to other parts of the main body of the juice extractor.

So far, various embodiments have been described in the context of a horizontal juice extractor 100 in which the spindle 120 lies in a horizontal plane during normal use. It should be understood that the present invention is not limited to a particular juice extractor orientation; for instance, it is equally feasible that the spindle 120 has an inclined orientation or lies in a vertical plane during normal use of the juice extractor 100.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A juice extractor (100) comprising a main body comprising:
- a food inlet (130),
- a juice outlet (140),
- a pulp discharge opening (150),
- a food processing chamber (110) with a food compression section (114) arranged between the food inlet and a pulp outlet (154),
- a spindle (120), rotatably mounted in the food processing chamber for transporting food from the food inlet through the food compression section and for transporting pulp through the pulp outlet out of the food compression section, and
- a pulp pushing section (180) arranged between the pulp outlet (154) and the pulp discharge opening (150), the pulp pushing section having a pulp inlet (186) which communicates with the pulp outlet, the pulp inlet and the discharge opening being arranged such that food enters and is discharged from the pulp pushing section in respective axial and radial directions, wherein the pulp pusing section comprises pushing means arranged to actively push the pulp out of the discharge opening in said radial direction, and wherein the pushing section has a core (183) rotatable in a bore (182), and the pushing means comprises a blade (190) having a first portion (193) and a second portion (197), one of said core and bore being provided with said blade and the other of said core and bore being provided with at least one rib (187), the at least one rib and the second portion being arranged to promote transport of the pulp in said axial direction, and the first portion being arranged to promote transport in said radial direction, towards and through said discharge opening.

2. The juice extractor (100) according to claim 1, wherein the pulp pushing section is arranged to condense the pulp prior to pushing the pulp out of the pulp discharge opening (150).

3. The juice extractor (100) according to claim 1, wherein the blade (190) is arranged to be rotated along the pulp discharge opening (150).

4. The juice extractor (100) according to claim 1, wherein the blade (190) is curved.

5. The juice extractor (100) according to claim 1, wherein the at least one rib (187) is a straight rib, extending in axial direction of the core (183) or bore (182).

6. The juice extractor (100) according to claim 1, wherein a rotation axis of the core (183) coincides with a rotation axis of the spindle (120).

7. The juice extractor (100) according to claim 1, wherein the blade (190) is arranged on the core (183).

8. The juice extractor (100) according to any preceding claim, wherein the pulp discharge opening (150) faces in a direction other than downward during normal use of the juice extractor.

9. The juice extractor (100) according to any preceding claim, wherein the pushing means is arranged to actively push the pulp through the discharge opening (150) in a direction that corresponds to a normal of said pulp discharge opening.

10. The juice extractor (100) according to any preceding claim, wherein the pushing means is arranged to actively push the pulp through the discharge opening (150) in a direction that corresponds to a main filling direction of a receptacle (170) that in use is arranged adjacent the discharge opening.

11. The juice extractor (100) according to any preceding claim, comprising a receptacle (170) with a fill opening, positionable so as to receive pulp from the discharge opening (150), wherein the receptacle further comprises an elevated bottom portion (175).

## Patentansprüche

1. Saftextraktor (100), mit einem Hauptkörper, umfassend:
- ein Lebensmitteleinlass (130),
- ein Saftauslass (140),
- eine Fruchtfleischaustrittöffnung (150),
- eine Lebensmittelverarbeitungskammer (110) mit einem Lebensmittelkompressionsabschnitt (114), der zwischen dem Lebensmitteleinlass und einem Fruchtfleischauslass (154) angeordnet ist;
- eine Spindel (120), die drehbar in der Lebensmittelverarbeitungskammer montiert ist, um Lebensmittel vom Lebensmitteleinlass durch den Lebensmittelkompressionsabschnitt und zum Transport von Fruchtfleisch durch den Fruchtfleischauslass aus dem Lebensmittelkompressionsabschnitt zu transportieren, und
- einen Fruchtfleischdruckabschnitt (180), der zwischen dem Fruchtfleischauslass (154) und der Fruchtfleischaustrittöffnung (150) angeordnet ist, wobei der Fruchtfleischdruckabschnitt einen Fruchtfleischeinlass (186) aufweist, der mit dem Fruchtfleischauslass in Verbindung steht, der Fruchtfleischeinlass und die Austrittöffnung so angeordnet sind, dass Lebensmittel in den jeweiligen axialen und radialen Richtungen in den Fruchtfleischdruckabschnitt eintreten und aus diesem austreten, wobei der Fruchtfleischdruckabschnitt Druckmittel umfasst, die angeordnet sind, um den Fruchtfleisch aktiv aus der Austrittöffnung in der radialen Richtung herauszudrücken, und wobei der Druckabschnitt einen Kern (183) aufweist, der in einer Bohrung (182) drehbar ist, und die Druckeinrichtung eine Klinge (190) mit einem ersten Abschnitt (193) und einem zweiten Abschnitt (197) umfasst, wobei einer der Kerne und Bohrungen mit der besagten Klinge versehen ist und der andere des Kerns und der Bohrung mit mindestens einer Rippe (187) versehen ist, wobei die mindestens eine Rippe und der zweite Abschnitt angeordnet sind, um den Transport der Fruchtfleisch in der axialen Richtung zu fördern, und der erste Abschnitt angeordnet ist, um den Transport in der besagten radialen Richtung zu und durch die Austrittsöffnung zu fördern.

2. Saftextraktor (100) nach Anspruch 1, wobei der Fruchtfleischdruckabschnitt so angeordnet ist, dass er das Fruchtfleisch vor dem Herausdrücken des Fruchtfleisches aus der Fruchtfleischaustrittöffnung (150) kondensiert.

3. Saftextraktor (100) nach Anspruch 1, wobei die Klinge (190) so angeordnet ist, dass sie entlang der Fruchtfleischaustrittöffnung (150) gedreht wird.

4. Saftextraktor (100) nach Anspruch 1, wobei die Klinge (190) gekrümmt ist.

5. Saftextraktor (100) nach Anspruch 1, wobei die mindestens eine Rippe (187) eine gerade Rippe ist, die sich in axialer Richtung des Kerns (183) oder der Bohrung (182) erstreckt.

6. Saftextraktor (100) nach Anspruch 1, wobei eine Rotationsachse des Kerns (183) mit einer Rotationsachse der Spindel (120) zusammenfällt.

7. Saftextraktor (100) nach Anspruch 1, wobei die Klinge (190) auf dem Kern (183) angeordnet ist.

8. Saftextraktor (100) nach einem der vorhergehenden Ansprüche, wobei die Fruchtfleischaustrittöffnung (150) während der normalen Verwendung des Saftextraktors einer anderen Richtung als nach unten zugewandt ist.

9. Saftextraktor (100) nach einem der vorhergehenden Ansprüche, wobei das Druckmittel angeordnet ist, um das Fruchtfleisch aktiv durch die Austrittöffnung (150) in einer Richtung zu drücken, die einer Normalen der besagten Fruchtfleischaustrittöffnung entspricht.

10. Saftextraktor (100) nach einem vorhergehenden Anspruch, wobei das Druckmittel angeordnet ist, um das Fruchtfleisch aktiv durch die Austrittöffnung (150) in einer Richtung zu drücken, die einer Hauptfüllrichtung eines Behälters (170) entspricht, der im Gebrauch anliegend der Austrittöffnung angeordnet ist.

11. Saftextraktor (100) nach einem der vorhergehenden Ansprüche, umfassend einen Behälter (170) mit einer Füllöffnung, die so positioniert werden kann, dass sie Fruchtfleisch von der Austrittöffnung (150) aufnimmt, wobei der Behälter ferner einen erhöhten Bodenabschnitt (175) umfasst.

## Revendications

1. Extracteur de jus (100) comprenant un corps principal comprenant:
- une ouverture d'admission d'aliments (130),
- une sortie de jus (140),
- une ouverture d'évacuation de pulpe (150),
- une chambre de traitement des aliments (110) avec une section de compression des aliments (114) agencée entre l'ouverture d'admission des aliments et une sortie de pulpe (154),
- une broche (120), montée rotative dans la chambre de traitement des aliments pour transporter les aliments de l'ouverture d'admission des aliments à travers la section de compression des aliments et pour transporter la pulpe à travers la sortie de la pulpe hors de la section de compression des aliments, et
- une section de poussée de pulpe (180) agencée entre la sortie de la pulpe (154) et l'ouverture d'évacuation de la pulpe (150), la section de poussée de la pulpe ayant une ouverture d'admission de pulpe (186) qui communique avec la sortie de la pulpe, l'ouverture d'admission de la pulpe et l'ouverture d'évacuation étant agencées de telle sorte que les aliments entrent et soient évacués de la section de poussée de la pulpe dans les directions axiales et radiales respectives, où la section de poussée de la pulpe comprend des moyens de poussée agencés pour pousser activement la pulpe hors de l'ouverture d'évacuation dans ladite direction radiale, et où la section de poussée a un noyau (183) tournant dans un alésage (182), et le moyen de poussée comprend une lame (190) ayant une première partie (193) et une seconde partie (197), l'un desdits noyau et alésage étant pourvu de ladite lame et l'autre desdits noyau et alésage étant pourvu d'au moins une nervure (187), l'au moins une nervure et la deuxième partie étant agencées pour favoriser le transport de la pulpe dans ladite direction axiale, et la première partie étant agencée pour favoriser le transport dans ladite direction radiale, vers et à travers ladite ouverture d'évacuation.

2. Extracteur de jus (100) selon la revendication 1, dans lequel la section de poussée de la pulpe est agencée pour condenser la pulpe avant de pousser la pulpe hors de l'ouverture d'évacuation de la pulpe (150) .

3. Extracteur de jus (100) selon la revendication 1, dans lequel la lame (190) est agencée pour tourner le long de l'ouverture d'évacuation de la pulpe (150).

4. Extracteur de jus (100) selon la revendication 1, dans lequel la lame (190) est courbée.

5. Extracteur de jus (100) selon la revendication 1, dans lequel l'au moins une nervure (187) est une nervure droite, s'étendant dans la direction axiale du noyau (183) ou de l'alésage (182).

6. Extracteur de jus (100) selon la revendication 1, dans lequel un axe de rotation du noyau (183) coïncide avec un axe de rotation de la broche (120).

7. Extracteur de jus (100) selon la revendication 1, dans lequel la lame (190) est agencée sur le noyau (183) .

8. Extracteur de jus (100) selon l'une quelconque des revendications précédentes, dans lequel l'ouverture d'évacuation de la pulpe (150) est orientée dans une direction autre que vers le bas pendant l'utilisation normale de l'extracteur de jus.

9. Extracteur de jus (100) selon l'une quelconque des revendications précédentes, dans lequel le moyen de poussée est agencé pour pousser activement la pulpe à travers l'ouverture d'évacuation (150) dans une direction qui correspond à une normale de ladite ouverture d'évacuation de la pulpe.

10. Extracteur de jus (100) selon l'une quelconque des revendications précédentes, dans lequel le moyen de poussée est agencé pour pousser activement la pulpe à travers l'ouverture d'évacuation (150) dans une direction qui correspond à une direction principale de remplissage d'un réceptacle (170) qui dans l'utilisation est agencé à côté de l'ouverture d'évacuation.

11. Extracteur de jus (100) selon l'une quelconque des revendications précédentes, comprenant un réceptacle (170) avec une ouverture de remplissage, positionnable de manière à recevoir la pulpe de l'ouverture d'évacuation (150), dans lequel le réceptacle comprend en outre une partie inférieure surélevée (175).
